# EUROPÄISCHE PATENTSCHRIFT

(11) **EP 2 100 063 B1**
(45) Veröffentlichungstag und Bekanntmachung des Hinweises auf die Patenterteilung: **08.08.2012**
(21) Anmeldenummer: 07819699.5
(22) Anmeldetag: 08.11.2007
(51) Int. Cl.: F16K 17/36, F16K 31/42, F16K 37/00

(54) **GASSICHERHEITSVENTIL MIT GASDETEKTOR**
GAS SAFETY VALVE COMPRISING A GAS DETECTOR
VALVE DE SÉCURITÉ DE GAZ DOTÉE D'UN DÉTECTEUR DE GAZ

(30) Priorität: 27.11.2006 DE 202006018092 U
(43) Veröffentlichungstag der Anmeldung: 16.09.2009
(73) Patentinhaber: Interforge Klee GmbH, 27356 Rotenburg/Wümme (DE)
(72) Erfinder: KLEE, Klaus F., 27383 Scheessel (DE)
(74) Vertreter: Eisenführ, Speiser & Partner
(86) Internationale Anmeldenummer: PCT/EP2007/009690
(87) Internationale Veröffentlichungsnummer: WO 2008/064765

(56) Entgegenhaltungen:
- WO-A-00/53961
- DE-A1- 10 200 273
- DE-A1- 19 729 229
- DE-B3- 10 304 952
- US-B1- 6 415 815

## Beschreibung

Die Erfindung betrifft ein Gassicherheitsventil, welches dazu ausgebildet ist, bei Auftreten von Gasleckagen einen automatischen Leitungsverschluss zu bewirken, siehe beispielsweise DE-B-10304952.

In vielen Bereichen der Industrie- und Haustechnik wird Gas über kürzere oder längere Strecken durch Gasleitungen transportiert. Die Anforderungen an die Dichtheit dieser Gasleitungen und insbesondere ihrer Flanschverbindungen, Verschraubungen und Verzweigungspunkte sind regelmäßig sehr hoch, da die transportierten Gase häufig brennbar und/oder gesundheitsgefährdend sind und folglich Gasleckagen die Gefahr der Bildung zündfähiger Gasgemische und gesundheitsgefährdender Gaskonzentrationen in der Umgebung der Leitung nach sich ziehen.

Es ist bekannt, zur Erhöhung der Sicherheit in der Umgebung von solchen Gasleitungen Gasmelder vorzusehen, welche die Gaskonzentration in der Umgebung messen und bei Überschreiten einer vorbestimmten Konzentration einen Alarmton erzeugen.

Durch solche Gasmelder kann zwar die Sicherheit im Bereich gasführender Leitungen erhöht werden, in bestimmten Fällen kann diese Sicherheitseinrichtung jedoch nicht zu der gewünschten Vermeidung von Gefährdungen oder Schäden durch Gasleckagen führen. Ziel der vorliegenden Erfindung ist es, eine Gassicherheitseinrichtung vorzuschlagen, mit der eine höhere Sicherheit gegenüber den durch Gasleckagen entstehenden Gefahren erreicht wird.

Diese Aufgabe wird erfindungsgemäß durch ein Gassicherheitsventil gelöst, umfassend eine Gaseinlassöffnung, eine Gasauslassöffnung, einen Gashauptkanal, welcher die Gaseinlassöffnung und die Gasauslassöffnung miteinander verbindet, ein in dem Gashauptkanal angeordnetes Hauptventil, mit einem Hauptventilsitz und einem Hauptventilkörper, die in einer geschlossenen Stellung des Hauptventils durch eine Schließkraft eines elastischen Elements aufeinander gepresst werden, eine den Druckraum zumindest teilweise begrenzende, bewegliche Druckfläche, die mit dem Hauptventil so gekoppelt ist dass sie bei Beaufschlagung mit Druck eine der Schließkraft entgegenwirkende Öffnungskraft auf das Hauptventil überträgt, ein Steuerventil, welches durch eine erste Steuerdruckleitung über eine in Gasströmungsrichtung vor dem Hauptventil angeordnete erste Steueröffnung mit der Gaseinlassöffnung verbunden ist, in einer ersten Position die Gaseinlassöffnung über eine zweite Steuerdruckleitung mit dem Druckraum verbindet, in einer zweiten Position die Verbindung zwischen Gaseinlassöffnung und Druckraum unterbricht und den Druckraum mit einem Niederdruckbereich verbindet, wobei die Druckfläche so bemessen ist, dass sie bei Verbindung mit dem in der Gaseinlassöffnung herrschenden bestimmten Norm-Leitungsdruck eine Öffnungskraft bewirkt, welche größer als die Schließkraft ist, und bei Verbindung mit dem in dem im Niederdruckbereich herrschenden Druck eine Öffnungskraft bewirkt, welche kleiner als die Schließkraft ist, einen Gassensor, der über eine Gasdetektoröffnung mit der Umgebung des Gassicherheitsventils verbunden ist und ausgebildet ist, um die Gaskonzentration in der Umgebung zu erfassen, eine Steuereinheit, welche mit dem Gassensor und dem Steuerventil verbunden ist und welche ausgebildet ist, um Signale vom Gassensor zu erhalten, mit zumindest einem zulässigen, vorbestimmten Grenzwert zu vergleichen und bei Erreichen oder Überschreiten zumindest eines der Grenzwerte das Steuerventil so anzusteuern, dass es von der ersten in die zweite Position schaltet.

Der Niederdruckbereich kann insbesondere der unmittelbare Umgebungsbereich des Gassicherheitsventils sein, d.h. der Bereich mit Umgebungsdruck.

Mit dem erfindungsgemäßen Gassicherheitsventil wird erreicht, dass in einer gegebenenfalls kompakt realisierbaren Baueinheit eine Reaktion auf die Gaskonzentration in der Umgebung erfolgt und bei Überschreiten einer zulässigen Gaskonzentration in dieser Umgebung ein automatischer Verschluss der Gasleitung bewirkt wird. Hierdurch kann sichergestellt werden, dass Gas, welches durch eine Gasleitung, in die das Gassicherheitsventil eingesetzt ist, zu einer Leckagestelle fließt, nicht zu einer Gaskonzentration in der Umgebung der Gasleitung führt, die oberhalb eines kritischen Konzentrationswertes liegt. Dabei weist das erfindungsgemäße Gassicherheitsventil den konstruktiven Vorteil auf, dass es durch den Druck des Gasmediums selbst die Betätigungskraft für das Öffnen bzw. Offenhalten des Gassicherheitsventils erzeugt und somit bezüglich dieser Aktuatorik unabhängig von externen Energiequellen ist, was zu einer entscheidenden Erhöhung der Betriebssicherheit des erfindungsgemäßen Gassicherheitsventils beiträgt.

Weiterhin weist das erfindungsgemäße Gassicherheitsventil den Vorteil auf, dass es durch ein passives, elastisches Element, insbesondere bevorzugt eine Schraubenfeder, in die gesicherte Stellung, d.h. die geschlossene Stellung, bewegt wird und durch den Gasleitungsdruck selbst in die geöffnete Stellung bewegt wird. Hierdurch wird sichergestellt, dass bei etwaigen Betriebsstörungen oder Nachlassen des Gasleitungsdrucks das Gassicherheitsventil prinzipiell in die geschlossene Stellung bewegt wird, welche den stabilen Betriebspunkt des Gassicherheitsventils darstellt.

Das erfindungsgemäße Gassicherheitsventil muss nicht notwendigerweise in dem überwachten Umgebungsbereich angeordnet sein, sondern kann außerhalb dieser Umgebung angeordnet sein und mit einem Gassensor verbunden sein, der in dieser Umgebung angeordnet ist.

Gemäß einer besonders bevorzugten Ausführungsform ist die Druckfläche an einer Membran oder einem Kolben ausgebildet. Hierbei bietet einerseits die Membran den Vorteil einer besonders kostengünstigen Fertigungsweise. Durch Ausbildung der Druckfläche an einem Kolben kann eine größere Robustheit und zugleich geringere Abmessung des erfindungsgemäßen Gassicherheitsventils erzielt werden.

Weiterhin ist es bevorzugt, dass der Gashauptkanal mit Hauptventil und der Druckraum mit Druckfläche in einem ersten Gehäusebauteil angeordnet sind und das Steuerventil in einem zweiten Gehäusebauteil angeordnet sind, das lösbar mit dem ersten Gehäusebauteil gekoppelt und mittels der ersten und zweiten Steuerleitung mit dem ersten Gehäusebauteil verbunden ist. Durch diese bevorzugte Bauweise des erfindungsgemäßen Gassicherheitsventils wird die konstruktive Aufteilung in eine Aktuator-/Hauptventileinheit und eine hieran lösbar befestigte Steuerventileinheit möglich, die insbesondere die Verwendung eines konventionellen 3-/2-Wegeventils für das Steuerventil ermöglicht.

Weiterhin ist es bevorzugt, dass in die erste Steuerleitung eine erste Drosselvorrichtung eingesetzt ist, welche den Gasfluss durch die erste Steuerleitung begrenzt, wobei die erste Drosselvorrichtung vorzugsweise im ersten Gehäusebauteil angeordnet ist. Durch diese Fortbildung wird sichergestellt, dass eine Leckage oder Fehlfunktion im Bereich des Gassicherheitsventils oder aber durch eine Trennung des ersten und zweiten Gehäusebauteils bei der zuvor beschriebenen Ausführungsform nicht zu unerwünscht hohen Leckagegasmengen führen kann. Die Ausführungsform macht sich insbesondere den Effekt des erfindungsgemäßen Gassicherheitsventils zunutze, dass zur Ansteuerung des Hauptventils über die erste Steuerdruckleitung lediglich geringe Volumenflüsse erforderlich sind und somit selbst bei erheblicher Drosselung dieser Flüsse eine ausreichend schnelle Reaktionszeit des Gassicherheitsventils erreicht werden kann. Insbesondere dann, wenn eine zwei- oder mehrteilige Bauweise des erfindungsgemäßen Gassicherheitsventils vorgesehen ist, wird die erste Drosselvorrichtung bevorzugt in unmittelbarer Nähe zur ersten Steueröffnung, d.h. in dem Gehäusebauteil, welches den Gashauptkanal umfasst, angeordnet.

Weiterhin ist es bevorzugt, wenn das Steuerventil den Druckraum über eine dritte Steuerdruckleitung mit dem Niederdruckbereich verbindet. Grundsätzlich sind verschiedene Bauweisen des erfindungsgemäßen Gassicherheitsventils möglich. So kann beispielsweise das Steuerventil eine direkte Öffnung zum Niederdruckbereich aufweisen und über lediglich zwei Steuerleitungen mit dem Gashauptkanal bzw. dem Druckraum verbunden sein und solcherart den Druckraum entweder mit dem Gashauptkanal verbinden oder aber den Druckraum mit dem Niederdruckbereich, beispielsweise dem Umgebungsbereich verbinden. Insbesondere ist aber bevorzugt, das Steuerventil über drei separate Steuerleitungen mit einerseits dem Gashauptkanal, andererseits dem Druckraum und weiterhin dem Niederdruckbereich zu verbinden.

Dabei kann insbesondere vorgesehen sein, dass in die dritte Steuerleitung eine dritte Drosselvorrichtung eingesetzt ist, welche den Gasfluss durch die dritte Steuerleitung begrenzt, wobei die dritte Drosselvorrichtung vorzugsweise im ersten Gehäusebauteil angeordnet ist. Durch diese dritte Drosselvorrichtung wird der Austrittsvolumenstrom beim Schließvorgang des Gassicherheitsventils begrenzt. Hierdurch können lokal hohe Konzentrationen des Gases im Bereich der Öffnung in den Niederdruckbereich verhindert werden, ohne dass eine nennenswerte Verzögerung des Schließvorgangs verursacht wird, da der Druckraum des erfindungsgemäßen Gassicherheitsventils ein kleines Volumen aufweisen kann und vorzugsweise mit einem solchen kleinen Volumen ausgebildet wird.

Das erfindungsgemäße Gassicherheitsventil kann eine Aktuator/Hauptventileinheit aufweisen, umfassend eine Gaseinlassöffnung, eine Gasauslassöffnung, einen Gashauptkanal, welcher die Gaseinlassöffnung und die Gasauslassöffnung miteinander verbindet, ein in dem Gashauptkanal angeordnetes Hauptventil, mit einem Hauptventilsitz und einem Hauptventilkörper, die in einer geschlossenen Stellung des Hauptventils durch eine Schließkraft eines elastischen Elements aufeinander gepresst werden, eine einen Druckraum zumindest teilweise begrenzende, bewegliche Druckfläche, die mit dem Hauptventil so gekoppelt ist dass sie bei Beaufschlagung mit Druck eine der Schließkraft entgegenwirkende Öffnungskraft auf das Hauptventil überträgt, eine erste Anschlussöffnung, die über eine in Gasströmungsrichtung vor dem Hauptventil angeordnete erste Steueröffnung mit der Gaseinlassöffnung verbunden ist, und eine zweite Anschlussöffnung, die mit dem Druckraum verbunden ist, und wobei die Druckfläche so bemessen ist, dass sie bei Verbindung mit dem in der Gaseinlassöffnung herrschenden bestimmten Norm-Leitungsdruck eine Öffnungskraft bewirkt, welche größer als die Schließkraft ist.

Mit einer solchen Aktuator-/Hauptventileinheit kann das erfindungsgemäße Gassicherheitsventil in einfacher Weise hergestellt und aufgebaut werden, indem es mit einem Steuerventil, beispielsweise einem 3-/2-Wegeventil und einem entsprechenden Gasdetektor kombiniert wird.

Das erfindungsgemäße Gassicherheitsventil arbeitet vorzugsweise nach einem Verfahren zum Betrieb eines Gassicherheitsventils, mit den Schritten:
- Verschließen eines sich zwischen einer Gaseinlass- und einer Gasauslassöffnung erstreckenden Gashauptkanals mit einem Hauptventil, indem ein Hauptventilsitz und ein Hauptventilkörper durch eine Schließkraft eines elastischen Elements aufeinandergepresst werden,
- Öffnen des Hauptventils in einer ersten Stellung eines Steuerventils, in der das Steuerventil durch eine Steuerdruckleitung, welche mit der Gaseinlassöffnung über eine in Gasströmungsrichtung vor dem Hauptventil angeordnete erste Steueröffnung verbunden ist, das Gas über eine zweite Steuerdruckleitung in einen Druckraum leitet, welcher durch eine Druckfläche begrenzt ist, mit dem Hauptventil gekoppelt ist und bei Beaufschlagung des Druckraums mit Druck eine der Schließkraft entgegenwirkende Öffnungskraft auf das Hauptventil überträgt,
- Erfassen der Gaskonzentration in einer Umgebung des Gassicherheitsventils und/oder in einer durch das Gassicherheitsventil abgesicherten Umgebung mittels eines Gassensors,
- Vergleichen der erfassten Gaskonzentration in der Umgebung mit einem vorbestimmten Konzentrationswert,
- Betätigen des Steuerventils in eine zweite Position, wenn die Gaskonzentration in der Umgebung den vorbestimmten Konzentrationswert erreicht oder überschreitet, und
- Verbinden des Druckraums mit einem Niederdruckbereich, insbesondere dem Umgebungsbereich, in der zweiten Stellung des Steuerventils, um den Druck im Druckraum abzubauen und das Hauptventil zu schließen.

Das Verfahren kann insbesondere fortgebildet werden, indem das Sicherheitsventil so ausgelegt ist, dass es bei Energieausfall schließt. Dies kann insbesondere erreicht werden, indem das Steuerventil so ausgebildet ist, dass es bei Energieausfall in die zweite Position geht, in welcher der Druckraum mit dem Niederdruckbereich verbunden wird und das Hauptventil hierdurch schließt.

Bevorzugte Ausführungsformen des erfindungsgemäßen Sicherheitsventils sind in den beigefügten Abbildungen wiedergegeben. Es zeigen:
Fig. 1: eine Draufsicht auf eine bevorzugte Ausführungsform einer Aktuator-/Hauptventileinheit für ein erfindungsgemäßes Gassicherheitsventil,
Fig. 2: eine entlang der Linie A-A in Fig. 2 geschnittene Seitenansicht der Einheit gemäß Fig. 1,
Fig. 3: eine entlang der Linie B-B in Fig. 2 geschnittene Frontalansicht der Einheit gemäß Fig. 1,
Fig. 4: eine entlang der Linie C-C in Fig. 2 geschnittene Draufsicht der Einheit gemäß Fig. 1.
Fig. 5: eine Seitenansicht der Aktuator-/Hauptventileinheit gemäß Fig. 1 der Einheit gemäß Fig. 1,
Fig. 6: eine entlang der Linie D-D in Fig. 5 geschnittene Frontalansicht der Einheit gemäß Fig. 1,
Fig. 7: einen Ausschnitt gemäß des Vergrößerungsdetails Z in Fig. 6 der Einheit gemäß Fig. 1,
Fig. 8: eine vergrößerte Abbildung des Details X in Fig. 2 der Einheit gemäß Fig. 1,
Fig. 9: eine vergrößerte Abbildung des Details Y in Fig. 2 der Einheit gemäß Fig. 1,
Fig. 10: eine perspektivische Ansicht der Einheit gemäß Fig. 1 von schräg unten vorne,
Fig. 11: eine Ansicht gemäß Fig. 2 der Einheit gemäß Fig. 1 in der geöffneten Hauptventilstellung, und

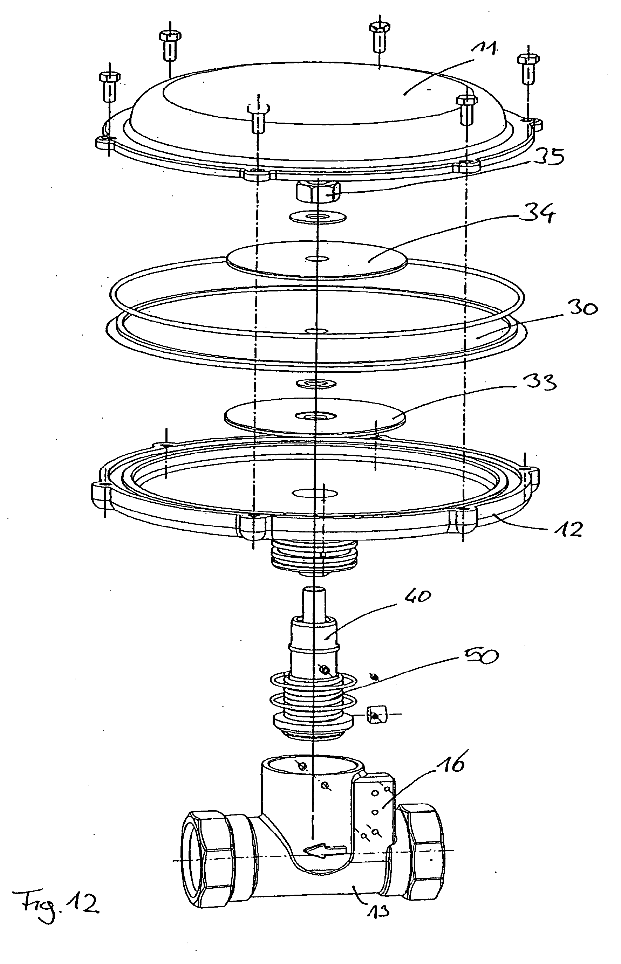

Fig. 12: eine perspektivische Ansicht der Einheit gemäß Fig. 1 in Explosionsdarstellung von schräg seitlich hinten oben.

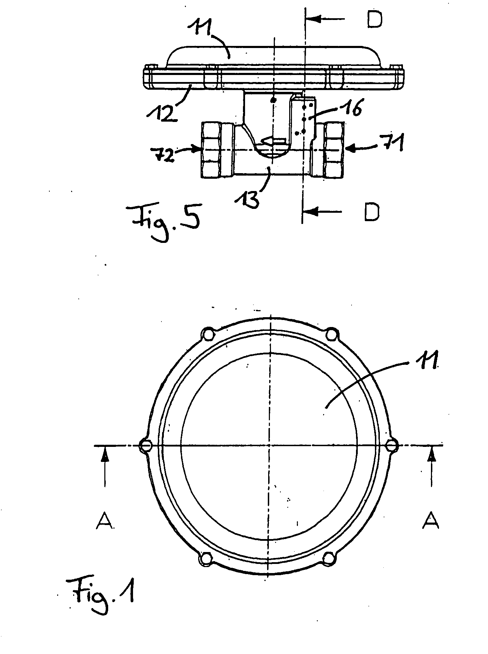

Bezug nehmend auf die Figuren 1-3 umfasst das erfindungsgemäße Gassicherheitsventil ein Gehäuse, welches sich aus einem Gehäuseoberteil 11, einem Gehäusemittelteil 12 und einem Gehäuseunterteil 13 zusammensetzt. Zwischen dem Gehäuseoberteil 11 und dem Gehäusemittelteil 12 ist ein zylindrischer Hohlraum ausgebildet, in dem eine Membran 30 mit kreisförmigem Umriss angeordnet ist.

Die Membran 30 ist zwischen dem Gehäuseoberteil 11 und dem Gehäusemittelteil 12 an ihrem äußeren Umfang eingespannt und unterteilt somit den zwischen Gehäuseoberteil 11 und Gehäusemittelteil 12 ausgebildeten zylindrischen Hohlraum in einen Druckraum 20, der zwischen Membran 30 und den zylindrischen Hohlraum begrenzenden Wandungen des Gehäusemitteilteils 12 ausgebildet ist und einen oberen Raum 21, der zwischen der Membran 30 und den zylindrischen Raum begrenzenden Wandungen des Gehäuseoberteils 11 ausgebildet ist. Der obere Raum 21 ist über eine Ventilationsöffnung 22 mit der Umgebung verbunden.

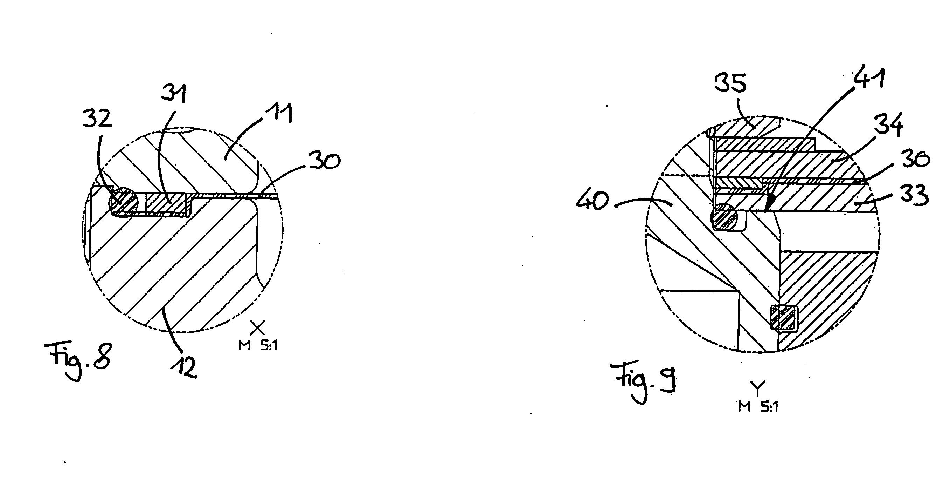

Wie insbesondere aus Fig. 8 zu erkennen ist, erfolgt die umfangsseitige Einspannung der Membran zwischen Gehäuseoberteil 11 und Gehäusemittelteil 12 durch Einklemmen der Membran 30 zwischen den beiden Gehäuseteilen und zusätzliche Verklemmung und Abdichtung mittels eines im Querschnitt rechteckigen Klemmrings 31 und eines Dichtungsrings 32.

Weiter Bezug nehmend auf die Fig. 1-3 ist die Membran 30 mittels einer unteren Befestigungsscheibe 33 und einer oberen Befestigungsscheibe 34 eingespannt, indem die beiden Befestigungsscheiben 33, 34 mittels einer Mutter 35 auf eine Auflagefläche 41 eines Dichtkolbens 40 gepresst werden und hierdurch die Membran zwischen sich einklemmen.

Fig. 9 zeigt in einem vergrößerten Ausschnitt die Anordnung der unteren Befestigungsscheibe 33, der Membran 30, der oberen Befestigungsscheibe 34 und der Mutter 35 an dem Dichtkolben 40 oberhalb der Auflagefläche 41.

Weiter Bezug nehmend auf die Fig. 1-3 erstreckt sich der Dichtkolben 40 ausgehend von einem Gewindeabschnitt 42, auf den die Mutter 35 aufgeschraubt ist, entlang der Mittelachse 1 des Gassicherheitsventils und bildet am unteren Ende einen konischen Ventilkörper 43 aus, in den ein Dichtungsring 44 eingelassen ist.

Der konische Ventilkörper 43 wird mittels einer Spiralfeder 50, die sich einerseits an einer Gehäusefläche 51 des Gehäusemittelteils und andererseits einer Stützfläche 52 am Dichtkolben 40 abstützt, auf einen dazu passenden, konischen Ventilsitz 61 gepresst, der am Gehäuseunterteil ausgebildet ist.

Weiterhin ist im Gehäuseunterteil 13 ein Gashauptkanal 70 ausgebildet, der eine Einlassöffnung 71 mit einer Auslassöffnung 72 verbindet.

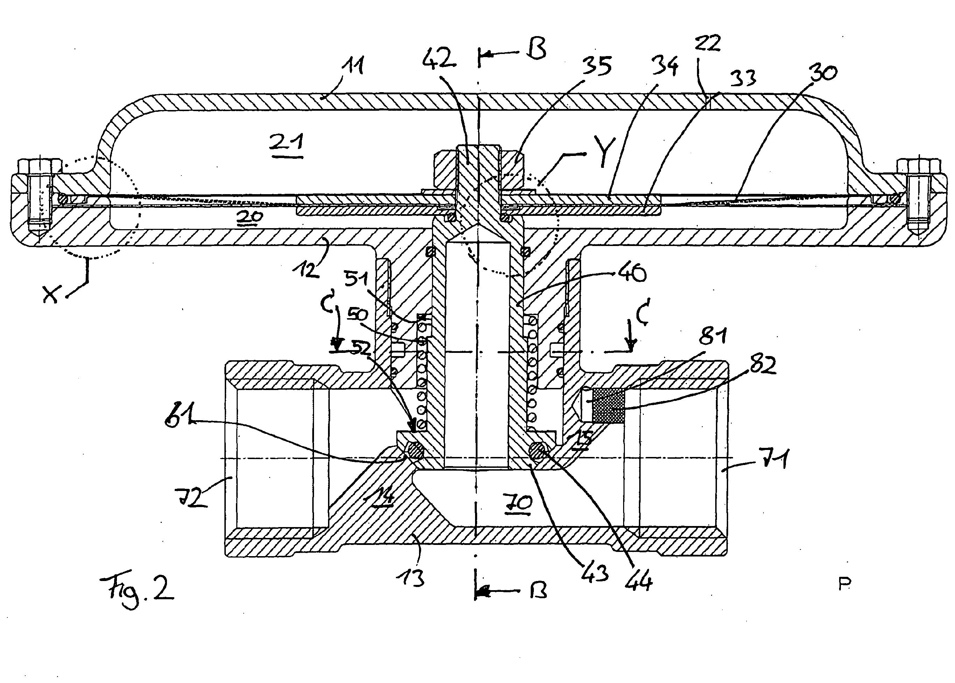

Der Ventilsitz 61 und der hierzu passende Ventilkörper 43 mit Dichtring 44 bilden in dem in Fig. 2 dargestellten geschlossenen Zustand einen dichten Verschluss aus, der in einer parallel zur Durchströmungsrichtung des Gashauptkanals 70 liegenden Ebene liegt und den Gasfluss zwischen der Einlassöffnung 71 und der Auslassöffnung 72 in Verbindung mit entsprechenden Wandabschnitten 14, 15 des Gehäuseunterteils 13 versperrt.

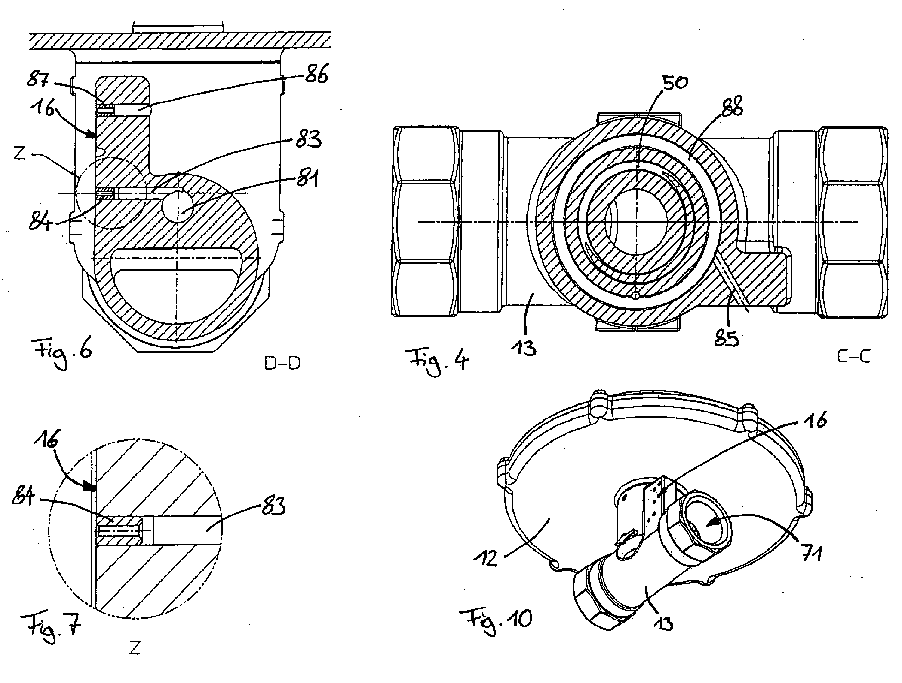

Benachbart zur Einlassöffnung 71 ist ein Steuerkanalabschnitt 81 einer ersten Steuerdruckleitung angeordnet, der über einen Filtereinsatz 82 mit der Gaseinlassöffnung 71 kommuniziert. Der Steuerkanalabschnitt 81 ist, wie insbesondere aus Fig. 5 und 6 zu erkennen ist, über einen senkrecht dazu angeordneten Steuerkanalabschnitt 83 in eine Anschlussfläche 16 für ein 3-/2-Wegeventil geführt. In den Steuerkanalabschnitt 83 der ersten Steuerdruckleitung ist eine Drossel 84 eingesetzt.

Die Anschlussfläche 16 für das Drei-/Zweiwegeventil umfasst neben dem Steuerkanalabschnitt 83 einen über diesem angeordneten zweiten Steuerkanalabschnitt 85 eine zweiten Steuerdruckleitung und eine über dieser angeordnete dritte Steuerdruckleitung 86, in welche wiederum eine Drossel 87 eingesetzt ist.

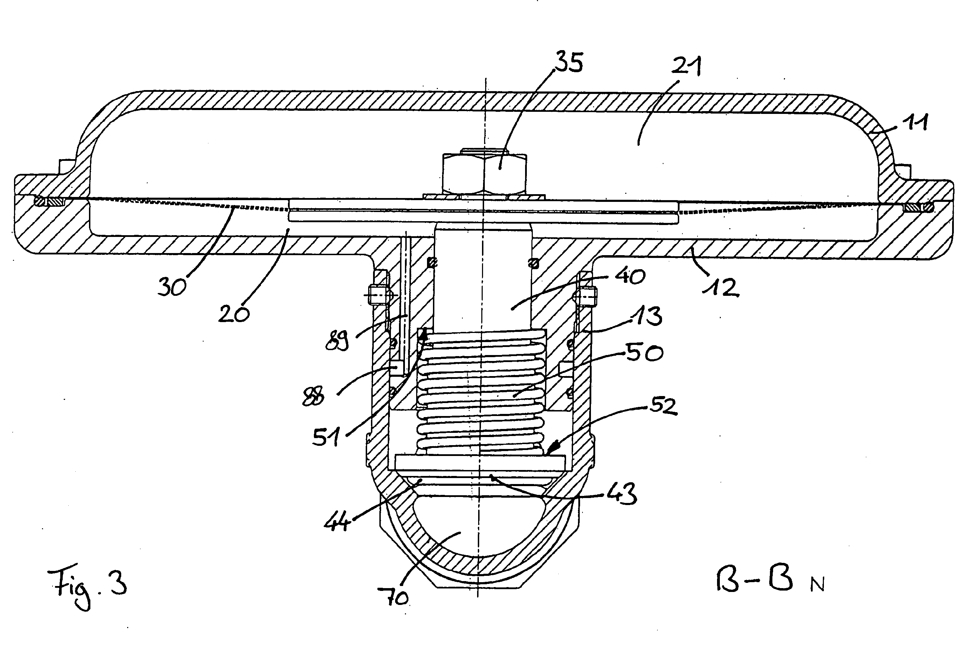

Wie insbesondere aus Fig. 4 zu erkennen ist, mündet der zweite Steuerkanalabschnitt 85 in einen Ringkanal 88, der über einen Steuerkanalabschnitt 89, wie ersichtlich aus Fig. 3, in den Druckraum 20 mündet.

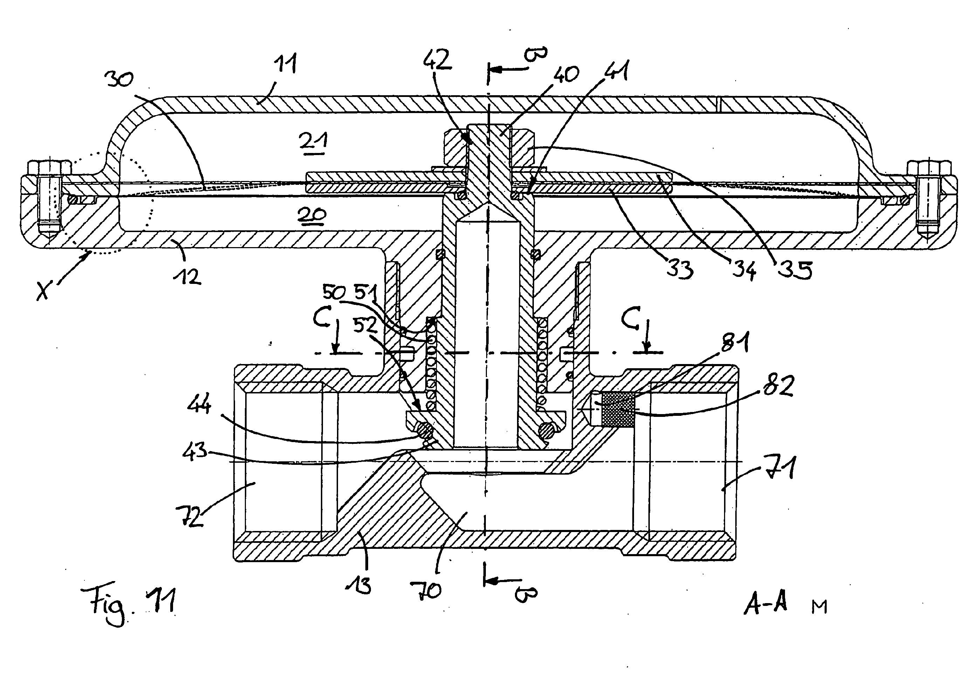

Über die erste Steuerdruckleitung 81, 83 kann bei entsprechender Stellung des 3-/2-Wegeventils, welches an die Ventilanschlussfläche 16 angesetzt ist, über die zweite Steuerdruckleitung 85, 88, 89 der Druckraum 20 mit dem in der Einlassöffnung 71 herrschenden Gasdruck beaufschlagt werden und folglich die Membran 30 mit Druck beaufschlagt werden. Hierdurch wird die durch die Feder 50 auf den Dichtkolben ausgeübte Schließkraft, welche den kegelförmigen Ventilkörper 43 mit Dichtring 44 auf den kongruent hierzu ausgeformten Ventilsitz 61 presst, aufgehoben und das Hauptventil aus der in Fig. 2 gezeigten geschlossenen Stellung in die in Fig. 11 gezeigte geöffnete Stellung bewegt.

Sobald ein Gassensor (nicht dargestellt) eine unzulässig hohe Konzentration eines Gases, insbesondere des durch den Gashauptkanal 70 geleiteten Gases in einer Umgebung misst, die durch das Gassicherheitsventil abgesichert werden soll, schaltet das 3-/2-Wegeventil, welches an der Ventilanschlussfläche 16 angesetzt ist, in eine Stellung, in welcher der Gasfluss von der ersten Steuerdruckleitung 81, 83 zu der zweiten Steuerdruckleitung 85, 88 ,89 unterbrochen ist und stattdessen die zweite Steuerdruckleitung 85, 88, 89 mit der dritten Steuerdruckleitung 86 verbunden ist. Auf diese Weise wird der in der Eingangsöffnung 71 herrschende Gasdruck vom Druckraum 20 abgesperrt und der Druckraum 20 kann durch die Kraft der Feder 50 durch die dritte Steuerdruckleitung 86 entleert werden. Hierdurch wird der Ventilkörper 43 auf den Ventilsitz 61 gepresst, das Hauptventil hierdurch geschlossen und ein weiterer Gasfluss durch den Gashauptkanal verhindert.

## Patentansprüche

1. Gassicherheitsventil, umfassend
- eine Gaseinlassöffnung (71),
- eine Gasauslassöffnung (72),
- einen Gashauptkanal (70), welcher die Gaseinlassöffnung und die Gasauslassöffnung miteinander verbindet,
- ein in dem Gashauptkanal angeordnetes Hauptventil (43, 61), mit
i. einem Hauptventilsitz (61) und
ii. einem Hauptventilkörper (43),
die in einer geschlossenen Stellung des Hauptventils durch eine Schließkraft eines elastischen Elements (50) aufeinander gepresst werden,
- eine einen Druckraum (20) zumindest teilweise begrenzende, bewegliche Druckfläche (30), die mit dem Hauptventil so gekoppelt ist dass sie bei Beaufschlagung mit Druck eine der Schließkraft entgegenwirkende Öffnungskraft auf das Hauptventil überträgt,
**gekennzeichnet durch**
ein Steuerventil, welches
i. **durch** eine erste Steuerdruckleitung (81, 83) über eine in Gasströmungsrichtung vor dem Hauptventil angeordnete erste Steueröffnung mit der Gaseinlassöffnung (71) verbunden ist,
ii. in einer ersten Position die Gaseinlassöffnung über eine zweite Steuerdruckleitung (85, 88, 89) mit dem Druckraum (20) verbindet,
iii. in einer zweiten Position die Verbindung zwischen Gaseinlassöffnung (71) und Druckraum (20) unterbricht und den Druckraum mit einem Niederdruckbereich verbindet,
- wobei die Druckfläche (30) so bemessen ist, dass sie
i. bei Verbindung mit dem in der Gaseinlassöffnung herrschenden bestimmten Norm-Leitungsdruck eine Öffnungskraft bewirkt, welche größer als die Schließkraft ist, und
ii. bei Verbindung mit dem in dem im Niederdruckbereich herrschenden Druck eine Öffnungskraft bewirkt, welche kleiner als die Schließkraft ist,
- einen Gassensor, der über eine Gasdetektoröffnung mit einer durch das Gassicherheitsventil abzusichernden Umgebung verbunden ist und ausgebildet ist, um die Gaskonzentration in der Umgebung zu erfassen,
- eine Steuereinheit, welche mit dem Gassensor und dem Steuerventil verbunden ist und welche ausgebildet ist,
i. um Signale vom Gassensor zu erhalten,
ii. mit zumindest einem zulässigen, vorbestimmten Grenzwert zu vergleichen und
iii. bei Erreichen oder Überschreiten des Grenzwerts zumindest eines der Grenzwerte das Steuerventil so anzusteuern, dass es von der ersten in die zweite Position schaltet.

2. Gassicherheitsventil nach Anspruch 1,
**dadurch gekennzeichnet, dass** der Gashauptkanal mit Hauptventil und der Druckraum mit Druckfläche in einem ersten Gehäusebauteil (11, 12, 13) angeordnet ist und das Steuerventil in einem zweiten Gehäusebauteil angeordnet ist, das lösbar mit dem ersten Gehäusebauteil gekoppelt und mittels der ersten und zweiten Steuerdruckleitung mit dem ersten Gehäusebauteil verbunden ist.

3. Gassicherheitsventil nach einem der vorhergehenden Ansprüche,
**dadurch gekennzeichnet, dass** in die erste Steuerdruckleitung eine erste Drosselvorrichtung (84) eingesetzt ist, welche den Gasfluss durch die erste Steuerdruckleitung begrenzt, wobei die erste Drosselvorrichtung vorzugsweise im ersten Gehäusebauteil angeordnet ist.

4. Gassicherheitsventil nach einem der vorhergehenden Ansprüche,
**dadurch gekennzeichnet, dass** das Steuerventil den Druckraum über eine dritte Steuerdruckleitung (86) mit dem Niederdruckbereich verbindet.

5. Gassicherheitsventil nach dem vorhergehenden Anspruch,
**dadurch gekennzeichnet, dass** in die dritte Steuerleitung eine dritte Drosselvorrichtung (87) eingesetzt ist, welche den Gasfluss durch die dritte Steuerleitung begrenzt, wobei die dritte Drosselvorrichtung vorzugsweise im ersten Gehäusebauteil angeordnet ist.

## Claims

1. Gas safety valve comprising:
- a gas inlet port (71);
- a gas outlet port (72);
- a main gas conduit (70) which connects the gas inlet port and the gas outlet port to one another;
- a main valve (43, 61) which is arranged in the main gas conduit and has
i. a main valve seat (61) and
ii. a main valve body (43),
which are pressed onto one another, when the main valve is in a closed position, by the closing force of an elastic element (50);
- a movable pressure surface (30) which at least partly delimits a pressure chamber (20) and which is coupled to the main valve in such a way that, when subjected to pressure, it transmits to the main valve an opening force which counteracts the closing force;
- wherein the pressure surface (30) is so dimensioned that:
i. when connected to the specific standard line pressure prevailing in the gas inlet port, it brings about an opening force which is greater than the closing force; and
ii. when connected to the pressure prevailing in the low-pressure area, it brings about an opening force which is smaller than the closing force;
**characterised by**
a control valve which:
i. is connected to the gas inlet port (71) by a first control-pressure line (81, 83) via a first control port arranged upstream of the main valve in the direction of the gas flow;
ii. in a first position, connects the gas inlet port to the pressure chamber (20) via a second control pressure line (85, 88, 89); and
iii. in a second position, interrupts the connection between the gas inlet port (71) and the pressure chamber (20) and connects said pressure chamber to a low-pressure area;
- a gas sensor which is connected, via a gas-detector port, to an environment to be safeguarded by the gas safety valve and is constructed so as to detect the gas concentration in said environment;
- a control unit which is connected to the gas sensor and the control valve and which is constructed so as:
i. to receive signals from the gas sensor;
ii. to compare them with at least one admissible, predetermined limit value; and
iii. when the limit value of at least one of the limit values is reached or exceeded, to activate the control valve in such a way that it switches from the first position into the second position.

2. Gas safety valve according to claim 1, **characterised in that** the main gas conduit having the main valve and the pressure chamber having the pressure surface are arranged in a first housing component (11, 12, 13) and the control valve is arranged in a second housing component which is detachably coupled to said first housing component and is connected to the latter by means of the first and second control-pressure lines.

3. Gas safety valve according to one of the preceding claims,
**characterised in that** there is inserted, in the first control-pressure line, a first throttling device (84) which limits the gas flow through said first control-pressure line, said first throttling device being preferably arranged in the first housing component.

4. Gas safety valve according to one of the preceding claims,
**characterised in that** the control valve connects the pressure chamber to the low-pressure area via a third control-pressure line (86).

5. Gas safety valve according to the preceding claim, **characterised in that** there is inserted, in the third control line, a third throttling device (87) which limits the gas flow through said third control line, said third throttling device being preferably arranged in the first housing component.

## Revendications

1. Valve de sécurité de gaz, comprenant
- une ouverture d'entrée de gaz (71),
- une ouverture de sortie de gaz (72),
- un canal principal de gaz (70) qui relie l'ouverture d'entrée de gaz et l'ouverture de sortie de gaz l'une à l'autre,
- une valve principale (43, 61) disposée dans le canal principal de gaz, avec
i. un siège de valve principale (61) et
ii. un corps de valve principale (43),
qui sont pressés l'un sur l'autre par une force de fermeture d'un élément élastique (50) dans une position fermée de la valve principale,
- une surface de pression (30) mobile, délimitant au moins partiellement une chambre de pression (20), couplée à la valve principale de sorte à transmettre une force d'ouverture, agissant contre la force de fermeture, à la valve principale lors de la mise sous pression,
- dans lequel la surface de pression (30) est dimensionnée de sorte qu'elle
i. provoque une force d'ouverture, qui est supérieure à la force de fermeture, lors de la liaison avec la pression de conduite normale déterminée régnant dans l'ouverture d'entrée de gaz, et
ii. provoque une force d'ouverture qui est inférieure à la force de fermeture lors de la liaison avec la pression régnant dans la zone basse pression,
**caractérisée par**
une valve de commande qui
i. est reliée à l'ouverture d'entrée de gaz (71) par une première conduite de pression de commande (81, 83) via une première ouverture de commande disposée avant la valve principale dans le sens d'écoulement du gaz,
ii. dans une première position, relie l'ouverture d'entrée de gaz à la chambre de pression (20) via une seconde conduite de pression de commande (85, 88, 89),
iii. dans une seconde position, interrompt la liaison entre l'ouverture d'entrée de gaz (71) et la chambre de pression (20) et relie la chambre de pression à une zone basse pression,
- un détecteur de gaz qui est relié via une ouverture de détecteur de gaz à un environnement devant être protégé par la valve de sécurité de gaz et est conçu pour détecter la concentration en gaz dans l'environnement,
- une unité de commande qui est reliée au détecteur de gaz et à la valve de commande et qui est conçue pour
i. recevoir des signaux du détecteur de gaz,
ii. comparer avec au moins une valeur limite prédéterminée autorisée et
iii. commander la valve de commande lors de l'atteinte ou du dépassement d'au moins une des valeurs limites de sorte qu'elle commute de la première à la seconde position.

2. Valve de sécurité de gaz selon la revendication 1,
**caractérisée en ce que** le canal de valve principale avec la valve principale et la chambre de pression avec la surface de pression sont disposés dans un premier composant de boîtier (11, 12, 13) et la valve de commande est disposée dans un second composant de boîtier qui est couplé de manière détachable au premier composant de boîtier et est relié au premier composant de boîtier à l'aide de la première et seconde conduite de pression de commande.

3. Valve de sécurité de gaz selon l'une quelconque des revendications précédentes, **caractérisée en ce qu'**un premier dispositif d'étranglement (84), qui limite le flux de gaz passant par la première conduite de pression de commande, est inséré dans la première conduite de pression de commande, le premier dispositif d'étranglement étant de préférence disposé dans le premier composant de boîtier.

4. Valve de sécurité de gaz selon l'une quelconque des revendications précédentes, **caractérisée en ce que** la valve de commande relie la chambre de pression à la zone basse pression via une troisième conduite de pression de commande (86).

5. Valve de sécurité de gaz selon la revendication précédente,
**caractérisée en ce qu'**un troisième dispositif d'étranglement (87), qui limite le flux de gaz passant par la troisième conduite de commande, est inséré dans la troisième conduite de commande, le troisième dispositif d'étranglement étant de préférence disposé dans le premier composant de boîtier.
